# EUROPÄISCHE PATENTANMELDUNG

(11) **EP 2 051 314 A1**
(43) Veröffentlichungstag der Anmeldung: **22.04.2009**
(21) Anmeldenummer: 08017171.3
(22) Anmeldetag: 30.09.2008
(51) Int. Cl.: H01M 2/10, H01M 10/50

(54) **Vorrichtung zur elektrischen Energiespeicherung**

(30) Priorität: 19.10.2007 DE 102007050506
(71) Anmelder: Behr GmbH & Co. KG, 70469 Stuttgart (DE)
(72) Erfinder: Damsohn, Herbert, 73773 Aichwald (DE); Pfender, Conrad, 74354 Besigheim (DE); Schiehlen, Thomas, 89174 Altheim (DE); Schmid, Caroline, 70186 Stuttgart (DE)

(57) **Zusammenfassung**

Die Erfindung betrifft eine Vorrichtung zur elektrischen Energiespeicherung insbesondere für ein Kraftfahrzeug, umfassend zumindest eine aufladbare elektrische Speicherzelle und ein zum Austausch von Wärme mit der Speicherzelle von einem Fluid durchströmbares Gehäuse (6), wobei die Speicherzelle in einem Halteglied (2) aufgenommen ist und mit dem Halteglied (2) in thermischem Kontakt steht, wobei das Halteglied (2) als von dem Fluid innerhalb des Gehäuses (6) umströmter Hohlkörper ausgeformt ist.

## Beschreibung

Die Erfindung betrifft eine Vorrichtung zur elektrischen Energiespeicherung nach dem Oberbegriff des Anspruchs 1.

Insbesondere für den elektrischen Antrieb von Kraftfahrzeugen, z. B. Hybrid-Fahrzeugen mit Verbrennungs- und Elektromotoren, werden leistungsfähige elektrische Energiespeicher benötigt, die aufgrund ihrer Verlustwärme einer aktiven Kühlung bedürfen. Grundsätzlich sind hiermit verschiedene Anforderungen verbunden, wie etwa eine betriebssichere Halterung der Speicherzellen, eine ausreichende und über die gesamte Oberfläche einer Speicherzelle gleichmäßige Wärmeabfuhr und eine kostengünstige Serienfertigung.

Die DE 10 2007 009 315 A1 beschreibt eine Vorrichtung zur Kühlung elektrischer Elemente eines Kraftfahrzeugs, bei der zylindrische Energiespeicher in hohlzylindrische Aufnahmen eingesetzt sind, die materialeinheitlich einstückig an einem kühlmitteldurchströmten metallischen Kühlkörper ausgeformt sind. Die hohlzylindrischen Aufnahmen sind nicht unmittelbar fiuidumströmt und die von den zylindrischen Seitenwänden der elektrischen Speicherzellen abgegebene Wärme wird durch Wärmeleitung der metallischen Aufnahmezylinder senkrecht zur Flussrichtung des Kühlmittels in den Kühlkörper eingeleitet.

Es ist die Aufgabe der Erfindung, eine Vorrichtung zur elektrischen Energiespeicherung anzugeben, die bei kostengünstiger Herstellung eine gute Kühlleistung für elektrische Speicherzellen bereitstellt.

Diese Aufgabe wird für eine eingangs genannte Vorrichtung erfindungsgemäß mit den kennzeichnenden Merkmalen des Anspruchs 1 gelöst. Dadurch, dass das Halteglied innerhalb des Gehäuses angeordnet und somit unmittelbar von dem wärmeführenden Fluid umströmt ist, wird ein besonders unmittelbarer Wärmeaustausch zwischen der Oberfläche einer Speicherzelle und dem wärmeführenden Fluid ermöglicht. Dies wiederum lässt auch bei hoher erforderlicher Kühlleistung die Verwendung von Kunststoffen zur Aufnahme bzw. Halterung der Speicherzellen zu, obwohl Kunststoffe im Vergleich zu Metall im Allgemeinen eine schlechtere Wärmeleitfähigkeit aufweisen.

Bei einer besonders bevorzugten Ausführungsform der Erfindung besteht das Halteglied aus einem elastischen Material, wobei das Halteglied biegeschlaff an der Speicherzelle anliegt. Hierdurch kann auf einfache Weise eine mechanische Halterung der Speicherzelle in dem Halteglied erreicht werden, z. B. indem der Durchmesser der Speicherzelle etwas größer als der Durchmesser des elastischen Halteglieds ausgelegt ist. Insbesondere ermöglicht die Auslegung des Halteglieds aus einem elastischen Material eine besonders gute unmittelbare flächige Anlage des Halteglieds an der Wandung der Speicherzelle ohne Entstehung von Luftspalten, bei deren Vorliegen die Gefahr einer lokalen Überhitzung der Speicherzelle bestehen kann.

In bevorzugter Detailgestaltung ist das Material ein Elastomer, insbesondere ein Silikon-Elastomer oder ein Silikon-Kautschuk. Besonders Elastomere auf Silikonbasis weisen eine im Vergleich zu anderen Kunststoffen relativ gute Wärmeleitfähigkeit auf, sowie eine sehr hohe und sehr dauerhafte Temperaturbeständigkeit. Sie sind im Spritzguss-Verfahren formbar, so dass auch komplizierte Formgebungen von Details des Halteglieds auf einfache Weise möglich sind.

Zur sicheren Vermeidung des Einschlusses von Luftblasen oder Luftspalten zwischen Speicherzelle und Oberfläche des Haltegliedes kann es vorteilhaft vorgesehen sein, dass das Halteglied an seiner an der Speicherzelle anliegenden Wandung zumindest eine Entlüftungsrille aufweist. Entlüftungsrillen zur Vermeidung von Lufteinschlüssen können sehr klein dimensioniert sein und in solcher Anzahl und räumlicher Dichte vorgesehen sein, dass eine Entstehung von Luftblasen zwischen den Wandungen sicher vermieden ist. Dabei kann zudem sichergestellt sein, dass die summierte Oberfläche der Entlüftungsrillen, über die kein unmittelbarer Kontakt zwischen Halteglied und Speicherzelle besteht, einen nur kleinen Anteil von z. B. weniger als 10% der gesamten Kontaktfläche zwischen Halteglied und Speicherzelle ausmacht.

Falls eine elastische mechanische Halterung der Speicherzelle in dem Halteglied nicht ausreichend sicher gegen Positionsverschiebungen der Speicherzelle im Zuge von Erschütterungen oder Vibrationen ist, so kann zweckmäßig ein zusätzliches Sicherungsmittel zur Sicherung der Position der Speicherzellen im Halteglied vorgesehen sein. Dabei kann es sich auf einfache Weise um eine Verklebung handeln. Auch mechanische Halterungen wie Klemmringe oder Ähnliches sind denkbar.

Im Interesse einer kostengünstigen Serienfertigung ist das Halteglied zweckmäßig als Spritzguss-Formteil ausgebildet.

In einer weiteren Ausführungsform weist das Halteglied auf der dem Fluid zugewandten Seite Noppen oder Erhebungen auf, um die Fläche für den Wärmeübertrag zu vergrößern und um die Fluidströmung gezielter zu führen.

Bei einer besonders vorteilhaften Ausführungsform der Erfindung ist es vorgesehen, dass eine Mehrzahl von Haltegliedern als materialeinheitlich einstückiger Haltegliedverbund ausgebildet ist. Hierdurch kann insbesondere bei großer Anzahl von Speicherzellen bzw. Haltegliedem die Herstellung und Montage einer erfindungsgemäßen Vorrichtung erheblich vereinfacht werden. Zudem bietet sich der wichtige Vorteil der Reduzierung von fluiddichten Verbindungsstellen zwischen Gehäuse und Haltegliedern im Vergleich zu einer Ausführung mit separaten Haltegliedern, so dass die Betriebssicherheit hinsichtlich der Fluiddichtheit verbessert und ein Ausschuss bei der Produktion verringert ist. Zweckmäßig weist hierzu der Haltegliedverbund eine fluiddicht geschlossene Verbindung zwischen den Haltegliedern auf. Die Verbindung ist vorteilhaft als im Wesentlichen ebene Verbindungsfläche ausgebildet.

Bei einer alternativen Ausführungsform ist eine derartige ebene Verbindungsfläche auf beiden Seiten des Haltegliedverbundes ausgebildet, wobei eine Verbindungsfläche bevorzugt mit dem Haltegliedverbund verklebt oder aufvulkanisiert ist.

Bei einer einfachen und zweckmäßigen Ausführungsform der Erfindung ist das Gehäuse als Wanne mit einem Bodenbereich und daran anschließenden Seitenwänden geformt. Eine solche einfache Gehäuseform kann besonders vorteilhaft mit einem Verbund von mehreren Haltegliedem kombiniert werden, wobei der Haltegliedverbund eine obere Abdeckung des Gehäuses ausbildet. Der Bodenbereich des Gehäuses kann vorteilhaft berandete Durchbrechungen zur fluiddichten Festlegung des Halteglieds oder der Mehrzahl von insbesondere zu einem Haltegliedverbund ausgeformten Halteglieder aufweisen. Hierdurch ist es ermöglicht, dass das Gehäuse vollständig von einem beidseitig offenen hohlkörperförmigen Halteglied durchgriffen wird, so dass die insbesondere zylindrisch ausgeformten Speicherzellen zu beiden Stirnseiten hin kontaktiert werden können.

Allgemein vorteilhaft besteht das Gehäuse aus einem von den Haltegliedem verschiedenen, insbesondere härteren Material. Somit wird durch das Gehäuse die mechanisch feste Außenstruktur der Vorrichtung festgelegt, wobei die Halteglieder zur optimalen thermisch kontaktierten Aufnahme der Speicherzellen elastisch ausgebildet sind.

In einer weiteren Ausführungsform weist das Gehäuse Strömungsumlenkungen auf, um beispielsweise eine mäanderförmige Durchströmung des Fluides durch das Gehäuse zu ermöglichen.

Zweckmäßig hat das Halteglied oder der Haltegliedverbund einen Verbindungsrand, über den das Halteglied oder der Haltegliedverbund fluiddicht mit einem Gehäuserand des Gehäuses verbunden ist. Der Verbindungsrand hat dabei zweckmäßig zumindest eine den Gehäuserand insbesondere formschlüssig übergreifende Lippe auf. Der Gehäuserand kann dabei z. B. wulstartig aufgedickt sein, so dass die übergreifende Lippe eine formschlüssige Verbindung darstellt, wobei durch die elastischen Eigenschaften des Materials des Halteglieds eine fluiddichte Anlage ohne weitere Dichtungsmittel gegeben sein kann. Es kann an der betreffenden Kontaktstelle aber auch ein zusätzliches Dichtungsmittel, z. B. eine dauerelastische Dichtmasse, vorgesehen sein. In zweckmäßiger Detailgestaltung sind der Verbindungsrand und der Gehäuserand alternativ oder ergänzend stoffschlüssig miteinander verbunden. Unter der stoffschlüssigen Verbindung ist eine Verklebung mittels eines zusätzlichen Klebstoffs zu verstehen oder auch eine stoffschlüssige Urformung, z. B. durch Anspritzen des Gehäuses an das Halteglied oder umgekehrt.

Allgemein bevorzugt ist das Halteglied als beidseitig offener Hohlkanal, insbesondere Hohlzylinder, ausgebildet. Hierdurch kann die Speicherzelle oder der Stapel von Speicherzellen in dem Hohlkanal von beiden Stirnseiten aus kontaktiert werden. Je nach Ausführungsform und besonderen Anforderungen kann es aber auch vorgesehen sein, dass das Halteglied als einseitig verschlossener Hohlkanal, insbesondere Hohlzylinder, ausgebildet ist.

Bei einer zweckmäßigen Detailgestaltung der Erfindung ist eine Mehrzahl von Haltegliedern von einer biegesteifen Kontaktierungsplatte überdeckt, wobei die in den Haltegliedern jeweils aufgenommenen Speicherzellen jeweils mit der Kontaktierungsplatte verbunden sind. Die Kontaktierungsplatte kann dabei neben der Aufgabe der Verschaltung und Kontaktierung der einzelnen Speicherzellen, die bevorzugt seriell verschaltet werden, zudem eine mechanische Verstärkung der Vorrichtung bewirken. Dies ist besonders dann zweckmäßig, wenn die Halteglieder als Haltegliedverbund aus einem elastischen Material ausgebildet sind, so dass der Oberflächenbereich des Gehäuses, der aus dem elastischen Material des Haltegliedverbundes besteht, durch die aufgesetzte und mit den Speicherzellen verschraubte und gegebenenfalls zusätzlich mit dem Gehäuse verbundenen Kontaktierungsplatte versteift ist.

Im Interesse einer einfachen Herstellung ist die Kontaktierungsplatte als Kunststoffplatte mit einer Mehrzahl von daran angeordneten metallischen Kontaktgliedern ausgebildet. Besonders zweckmäßig kann die Kunststoffplatte dabei an die Kontaktglieder angespritzt sein.

Weitere Vorteile und Merkmale der Erfindung ergeben sich aus dem nachfolgend beschriebenen Ausführungsbeispiel sowie aus den abhängigen Ansprüchen.

Nachfolgend wird ein bevorzugtes Ausführungsbeispiel der Erfindung beschrieben und anhand der anliegenden Zeichnungen näher erläutert.
- Fig. 1: zeigt eine räumliche Ansicht eines Haltegliedverbunds einer erfindungsgemäßen Vorrichtung.
- Fig. 2: zeigt einen schematischen Querschnitt durch ein Gehäuse der Vorrichtung.
- Fig. 3: zeigt eine schematische Schnittdarstellung eines ersten Verbindungsbereichs des Verbundteils aus Fig. 1 mit dem Gehäuse aus Fig. 2.
- Fig. 4: zeigt eine schematische Darstellung eines zweiten Verbindungsbereichs des Verbundteils aus Fig. 1 mit dem Gehäuse aus Fig. 2.
- Fig. 5: zeigt eine Draufsicht auf eine Kontaktierungsplatte der erfindungsgemäßen Vorrichtung.
- Fig. 6: zeigt eine Querschnittsansicht durch ein Kontaktglied der Kontaktierungsplatte aus Fig. 5.

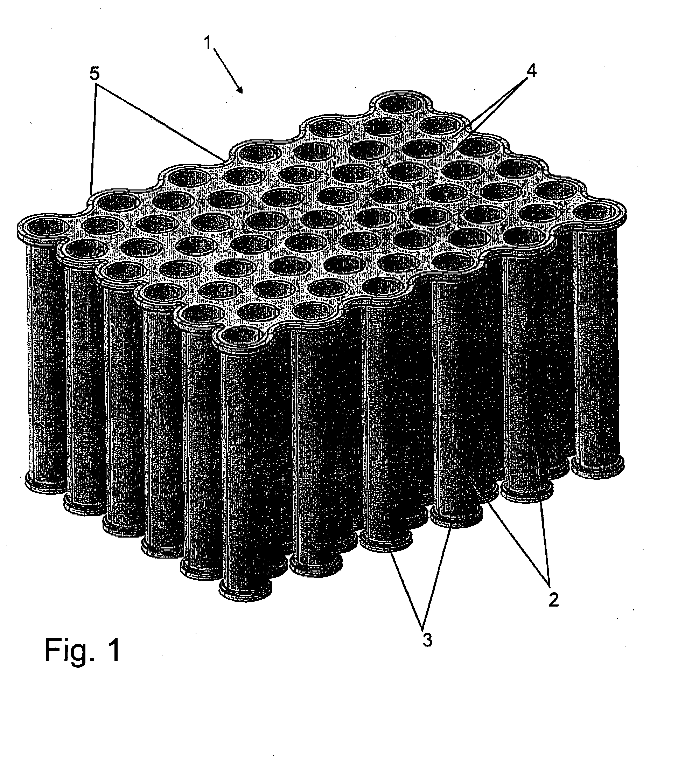

Die Vorrichtung zur elektrischen Energiespeicherung gemäß dem beschriebenen Ausführungsbeispiel umfasst eine Mehrzahl von zylindrischen Speicherzellen in Form von Lithium-Ionen-Akkumulatoren. Diese sind in einem in Fig. 1 dargestellten materialeinheitlich einstückigen Haltegliedverbund 1 aus einer Vielzahl von vorliegend insgesamt 61 hohlzylindrisch geformten Haltegliedern 2 angeordnet. Die Vorrichtung der konkreten Ausführungsform dient als Fahrbatterie in einem Hybrid-Fahrzeug mit einem Elektromotor und einem Verbrennungsmotor.

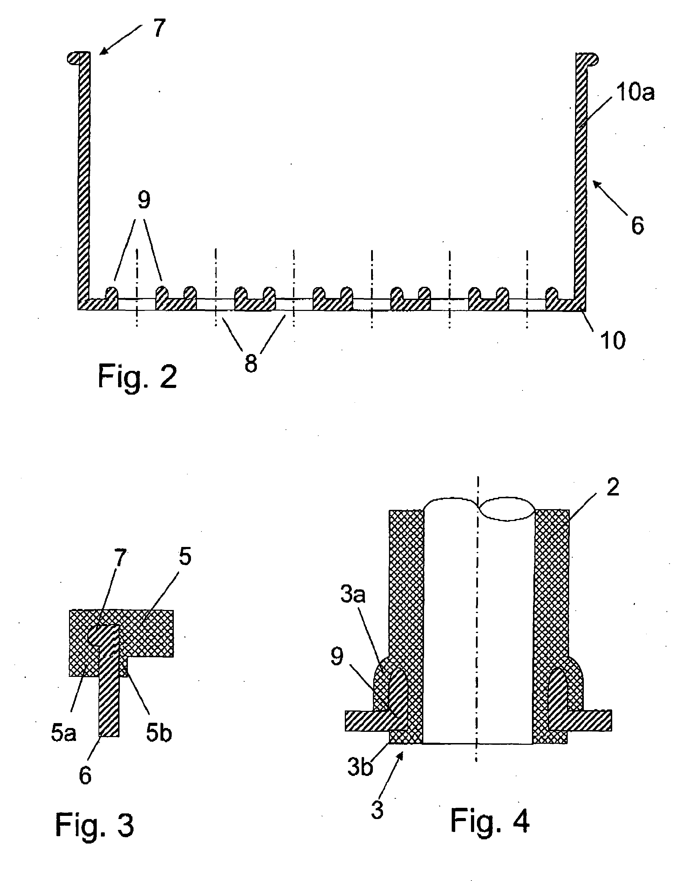

Jedes der hohlzylindrischen Halteglieder 2 kann eine oder auch mehrere sequentiell hintereinander angeordnete zylindrische Speicherzellen aufnehmen. Die Hohlzylinder 2 sind zu beiden Seiten hin offen. In einem unteren Endbereich haben die Hohlzylinder 2 jeweils einen Verbindungsrand 3, der in Fig. 4 schematisch dargestellt ist.

An ihrem gegenüberliegenden oberen Endbereich sind die einzelnen Halteglieder 2 über eine ebene Verbindungsfläche 4 miteinander verbunden, wobei die Verbindungsfläche 4 bis auf die sie durchbrechenden hohlzylindrischen Öffnungen der Halteglieder 2 eine geschlossene Fläche mit einer umlaufenden Verbindungsberandung 5 ausbildet.

Der Haltegliedverbund 1 ist ein einstückiges Spritzguss-Formteil aus einem Silikon-Kautschuk. Die Wanddicke der zylindrischen schlauchartigen Halteglieder 2 beträgt zwischen etwa 0,2 und 2 mm, wobei der Durchmesser der zylindrischen Speicherzellen wenige Zentimeter beträgt.

Die im Verhältnis relativ dünn ausgeformten Wandungen der Halteglieder 2 aus elastomerem Material liegen biegeschlaff und somit ohne Ausbildung von Luftspalten auf den Oberflächen der zylindrischen Elemente auf. Da das Material elektrisch isolierend ist, können die elektrischen Elemente eine nicht-potenzialfreie, leitende Oberfläche aufweisen. Zur sicheren Vermeidung von Lufteinschlüssen zwischen der Wandung der elektrischen Speicherzellen und der Halteglieder 2 sind in Längsrichtung der Hohlzylinder 2 innenseitig jeweils mehrere feine Entlüftungsrillen vorgesehen (nicht dargestellt).

Die elektrischen Speicherzellen können zusätzlich mittels Klebstoff in ihrer Position in den elastischen Haltegliedern 2 gesichert werden. Es kann aber ausreichen, einen entsprechenden Differenzdurchmesser zwischen den Haltegliedem 2 und den Speicherzellen vorzusehen, um die Speicherzellen elastisch vorgespannt zu halten.

Der Haltegliedverbund 1 ist in einem Gehäuseteil 6 (siehe Fig. 2) angeordnet, wodurch insgesamt ein geschlossener und von einem Fluid durchströmter Hohlraum geschaffen wird. Zur Zuführung und Abführung des Fluids, das insbesondere ein Wasser-Glykol-Gemisch oder ein Thermoöl oder sonstige geeignete Kühlflüssigkeit sein kann, weist das Gehäuse 6 nicht dargestellte Anschlüsse auf.

Der Haltegliedverbund 1 ist mit seinem oberen umlaufenden Verbindungsrand 5 an einem oberen umlaufenden Rand 7 von Seitenwänden 10a des wannenförmigen Kunststoffgehäuses 6 festgelegt. In Fig. 3 ist dargestellt, dass der Rand 7 des Kunststoffteils 6 hierzu eine wulstartige Aufweitung aufweist und das elastische Material des Randes 5 des Haltegliedverbunds 1 eine entsprechend invers geformte Rille mit den Rand 7 übergreifenden Lippen 5a, 5b. Zur sicheren, dauerhaften und fluiddichten Festlegung kann an dieser Verbindungsstelle ein Dichtmittel oder eine Verklebung vorgesehen sein oder auch eine mechanische Sicherung.

Das Gehäuse 6 hat einen Boden 10 mit daran anschließenden Seitenwänden 10a. In dem Boden 10 des Gehäuses 6 ist für jedes der Halteglieder 2 des Haltegliedverbunds 1 eine kreislochförmige Durchbrechung 8 vorgesehen, die einen in das Gehäuseinnere vorstehenden Gehäuserand 9 hat. Wie die Detaildarstellung in Fig. 4 zeigt, ist an den unteren Rändern 3 der Halteglieder 2 jeweils eine rillenartige Öffnung zur Aufnahme der Berandungen 9 der Durchbrechungen 8 des Bodens 10 vorgesehen. Auf ähnliche Weise wie am oberen Rand 5, 7 wird der Rand 9 der Durchbrechung 8 von Lippen 3a, 3b des Randes 3 des Halteglieds 2 umschlossen, so dass eine gute mechanische Halterung und eine gute Fluiddichtheit gegeben ist. Zusätzlich können wie im Fall des oberen Randes 5, 7 stoffschlüssige Verbindungen oder auch mechanische Sicherungen vorgesehen sein.

Grundsätzlich ist es auch möglich, entweder das Gehäuse 6 an den Haltegliedverbund 1 oder den Haltegliedverbund 1 an das Gehäuse 6 anzuspritzen.

Bevorzugt werden die beiden Bauteile 1, 6 jedoch zunächst separat hergestellt und dann mittels eines speziellen Montagewerkzeugs miteinander verbunden. Dabei greifen Montagehilfen in sämtliche der hohlzylindrischen Halteglieder 2 ein und die Berandungen 5, 7, 3, 9 werden miteinander verbunden. Danach kann das Gehäuseinnere evakuiert werden, was zu einer Aufweitung der elastischen Halteglieder 2 führt, so dass auf einfache Weise die Speicherzellen in die Halteglieder 2 eingesetzt werden können.

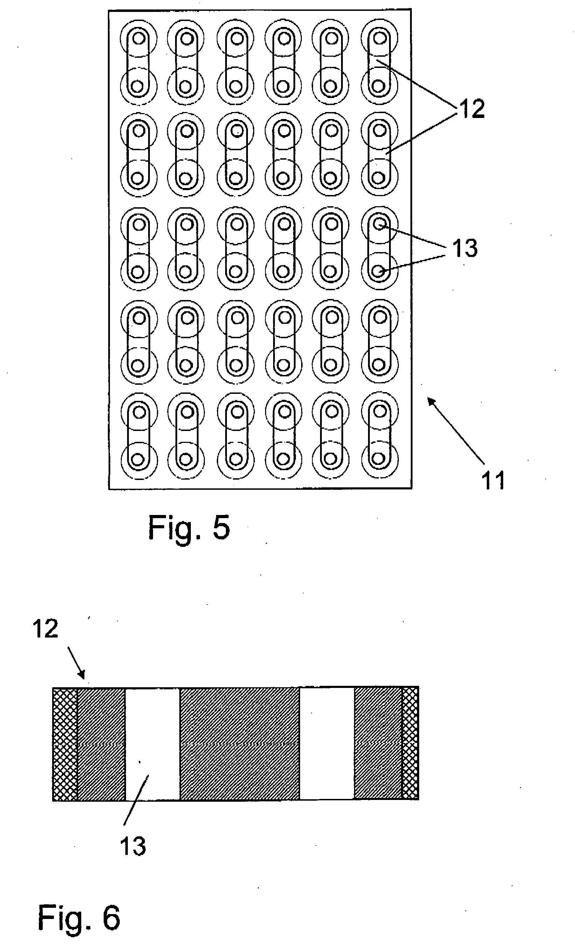

Bei der erfindungsgemäßen Vorrichtung stellt die aus Elastomer bestehende Verbindungsfläche 4 eine obere Abschlussfläche des Gehäuses dar, wobei durch die elastischen Materialeigenschaften eine geringe mechanische Stabilität dieses Gehäusebereichs gegeben ist. Die Kontaktierung der Speicherzellen in den Haltegliedem 2 erfolgt daher zweckmäßig mittels einer steifen Kontaktierungsplatte 11 (siehe Fig. 5). Die Kontaktierungsplatte 11 besteht aus einem harten Kunststoff, wobei eine Anzahl und Position der Speicherzellen entsprechende Menge an metallischen Kontaktgliedem 12 mit der Kontaktierungsplatte 11 verbunden ist. Vorliegend sind die metallischen Kontaktglieder 12 von dem Material der Kontaktierungsplatte 11 umspritzt, so dass sie auf einfache Weise fest mit der Platte 11 verbunden und die Kontaktglieder gegeneinander isoliert sind.

Die Schnittzeichnung nach Fig. 6 durch eines der Kontaktglieder 12 zeigt vorhandene Kontaktierungsbohrungen 13, so dass die in den elastischen Haltegliedern 2 positionsfest gehaltenen Speicherzellen (nicht dargestellt) mit den Kontaktgliedern 12 mit Schrauben (nicht dargestellt) verschraubbar sind. Die Verschraubung der Vielzahl von Speicherzellen mit den Kontaktgliedern 12, die mechanisch fest in der Kontaktierungsplatte 11 angeordnet sind einerseits, und die mechanisch feste Halterung der Speicherzellen in den Haltegliedem 2 ergibt eine sehr effektive mechanische Versteifung der elastischen Verbindungsfläche 4, so dass sogar ein gewisser Druck des das Gehäuse durchströmenden Fluids, das hierbei die Außenflächen der Halteglieder 2 vollflächig umströmt, ermöglicht ist. Zur weiteren Verbesserung der mechanischen Festigkeit der Vorrichtung kann die Kontaktierungsplatte 11 zudem mechanisch mit dem aus einem festen Material bestehenden Gehäuseteil 6 verbunden sein.

Es versteht sich, dass das Gehäuse 6 auch aus mehreren Teilen aufgebaut sein kann. In alternativer Ausgestaltung können die Halteglieder 2 unten einseitig verschlossen sein und somit sacklochartig ausgebildet. Bei dieser Ausführung ist auch der Gehäuseboden des Gehäuses 6 geschlossen. Gegebenenfalls können korrespondierende Ausformungen, wie etwa vorstehende Noppen zur formschlüssigen Positionierung der Halteglieder 2 gegenüber einem solchen geschlossenen Boden des Gehäuses 6 vorgesehen sein.

## Patentansprüche

1. Vorrichtung zur elektrischen Energiespeicherung insbesondere für ein Kraftfahrzeug, umfassend
zumindest eine aufladbare elektrische Speicherzelle und
ein zum Austausch von Wärme mit der Speicherzelle von einem Fluid durchströmbares Gehäuse (6),
wobei die Speicherzelle in einem Halteglied (2) aufgenommen ist und mit dem Halteglied (2) in thermischem Kontakt steht,
**dadurch gekennzeichnet,**
**dass** das Halteglied (2) als von dem Fluid innerhalb des Gehäuses (6) umströmter Hohlkörper ausgeformt ist.

2. Vorrichtung nach Anspruch 1, **dadurch gekennzeichnet, dass** das Halteglied (2) aus einem elastischen Material besteht, wobei das Halteglied (2) biegeschlaff an der Speicherzelle anliegt.

3. Vorrichtung nach einem der vorhergehenden Ansprüche, **dadurch gekennzeichnet, dass** die Position der Speicherzelle in dem Halteglied (2) durch ein Sicherungsmittel gesichert ist, insbesondere durch eine Verklebung.

4. Vorrichtung nach einem der vorhergehenden Ansprüche, **dadurch gekennzeichnet, dass** eine Mehrzahl von Haltegliedem (2) als materialeinheitlich-einstückiger Haltegliedverbund (1) ausgebildet ist.

5. Vorrichtung nach Anspruch 4, **dadurch gekennzeichnet, dass** der Haltegliedverbund (1) eine fluiddicht geschlossene Verbindung (4) zwischen den Haltegliedem (2) aufweist.

6. Vorrichtung nach Anspruch 5, **dadurch gekennzeichnet, dass** die Verbindung zwischen den Haltegliedem (2) als im Wesentlichen ebene Verbindungsfläche (4) ausgebildet ist.

7. Vorrichtung nach einem der vorhergehenden Ansprüche, **dadurch gekennzeichnet, dass** das Gehäuse (6) als Wanne mit einem Bodenbereich (10) und daran anschließenden Seitenwänden ausgebildet ist.

8. Vorrichtung nach Anspruch 7, **dadurch gekennzeichnet, dass** der Bodenbereich (10) eine berandete Durchbrechung (8) zur fluiddichten Festlegung des Halteglieds (2) aufweist.

9. Vorrichtung nach einem der vorhergehenden Ansprüche, **dadurch gekennzeichnet, dass** das Gehäuse (6) aus einem von den Haltegliedern (2) verschiedenen, insbesondere härteren Material besteht.

10. Vorrichtung nach einem der vorhergehenden Ansprüche **dadurch gekennzeichnet, dass** das Halteglied (2) oder der Haltegliedverbund (1) einen Verbindungsrand (3, 5) aufweist, über den das Halteglied (2) oder der Haltegliedverbund (1) fluiddicht mit einem Gehäuserand (7, 9) verbunden ist.

11. Vorrichtung nach Anspruch 10, **dadurch gekennzeichnet, dass** der Verbindungsrand (3, 5) zumindest eine den Gehäuserand (3, 5) insbesondere formschlüssig übergreifende Lippe (5a, 5b, 3a, 3b) aufweist.

12. Vorrichtung nach einem der Ansprüche 10 oder 11, **dadurch gekennzeichnet, dass** der Verbindungsrand (3, 5) und der Gehäuserand (7, 9) stoffschlüssig miteinander verbunden sind.

13. Vorrichtung nach einem der vorhergehenden Ansprüche, **dadurch gekennzeichnet, dass** das Halteglied (2) als beidseitig offener Hohlkanal, insbesondere Hohlzylinder, ausgebildet ist.

14. Vorrichtung nach einem der Ansprüche 1 bis 12, **dadurch gekennzeichnet, dass** das Halteglied (2) als einseitig verschlossener Hohlkanal, insbesondere Hohlzylinder, ausgebildet ist.

15. Vorrichtung nach einem der vorhergehenden Ansprüche, **dadurch gekennzeichnet, dass** eine Mehrzahl von Haltegliedem (2) von einer biegesteifen Kontaktierungsplatte (11) überdeckt ist, wobei die in den Haltegliedem (2) jeweils aufgenommenen Speicherzellen jeweils mit der Kontaktierungsplatte (11) verbunden sind.
